# FASCICULE DE BREVET EUROPEEN

(11) **EP 3 073 181 B1**
(45) Date de publication et mention de la délivrance du brevet: **10.03.2021**
(21) Numéro de dépôt: 16160984.7
(22) Date de dépôt: 17.03.2016
(51) Int. Cl.: F21S 41/16, F21S 45/70

(54) **MODULE D'ÉCLAIRAGE LASER À DISPOSITIF DE SÉCURITÉ**
LASER-BELEUCHTUNGSMODUL MIT SICHERHEITSVORRICHTUNG
LASER ILLUMINATION MODULE WITH SAFETY DEVICE

(30) Priorité: 24.03.2015 FR 1552454
(43) Date de publication de la demande: 28.09.2016
(73) Titulaire: VALEO VISION, 93012 Bobigny Cedex (FR)
(72) Inventeur: EL IDRISSI, Hafid, 93500 PANTIN (FR); SOMMERSCHUH, Stephan, 75013 PARIS (FR)

(56) Documents cités:
- EP-A1- 2 821 692
- EP-A1- 2 963 337
- WO-A1-2015/000006
- WO-A1-2015/118003
- DE-A1-102012 220 481
- JP-A- 2013 191 479
- US-A1- 2011 063 115
- US-A1- 2011 084 609
- US-A1- 2011 116 520
- US-A1- 2015 023 032

## Description

La présente invention concerne de manière générale les modules d'éclairage à source laser pour véhicule automobile. Plus spécifiquement, la présente invention concerne un module d'éclairage qui permet de mesurer des variations d'un ou plusieurs paramètres ou une qualité d'un faisceau de lumière convertie délivré en sortie par le module d'éclairage.

On connaît déjà du document EP2063170 un système d'éclairage pour véhicule automobile, muni d'une source primaire dont le rayonnement lumineux est réparti spatialement, au moyen d'un système de balayage, sur une surface d'un dispositif de conversion de longueur d'onde pour générer un faisceau lumineux secondaire. Ces unités peuvent émettre par inadvertance des rayons laser de classe quatre, qui sont dangereux pour les yeux des piétons et des autres usagers de la route. De tels rayons laser peuvent provoquer des dommages de la cornée, de la rétine ou de la peau qui peuvent être irréversibles. De plus, ces rayons de classe quatre peuvent être à l'origine d'incendies. Pour atténuer ces effets, le système d'éclairage muni d'une source laser peut comporter généralement des dispositifs qui permettent de réduire le rayonnement émis vers l'extérieur.

La demande de brevet français FR3002023 propose un système de sécurité comprenant des moyens de réflexion du rayonnement lumineux vers des moyens de détection d'un défaut de balayage. Ces moyens de réflexion sont agences sur un bord de la surface de balayage. Le principe de ce système de sécurité repose sur une surveillance de la fréquence de balayage du bord en question. En revanche, ce système de sécurité est inopérant à l'égard de défaut survenant sur le dispositif de conversion de lumière. Il est dès lors des situations où le faisceau laser peut être réfléchi par le dispositif de conversion vers l'extérieur du projecteur alors que le balayage est correctement effectué. Ainsi, le système de sécurité ne détecte pas de défaut et n'intervient donc pas. La demande de brevet EP2821692 A1 montre un projecteur pour véhicule automobile avec une source laser, un système de balayage et un dispositif de conversion du rayonnement laser en lumière blanche ainsi qu'une unité de contrôle permettant de détecter une anomalie de fonctionnement en comparant un paramètre du rayonnement laser émis par la source à au moins un paramètre de la lumière résiduelle reçue par un détecteur.

L'objet de l'invention est un module d'éclairage pour un véhicule, comprenant
- une source lumineuse pour générer un faisceau laser,
- un dispositif de conversion de lumière pour convertir le faisceau laser en un faisceau de lumière convertie,
- innovant en ce qu'il comprend un système de sécurité pour surveiller le faisceau de lumière convertie et mesurer les variations d'au moins un paramètre associé au faisceau de lumière convertie.

Selon un exemple de réalisation, le système de sécurité comprend un dispositif de détection disposé de manière à recevoir directement le faisceau de lumière convertie.

Selon l'invention, le dispositif de détection est capable de fournir au moins deux informations distinctives correspondant à deux paramètres du faisceau de lumière convertie.

Dans un tel cas, un premier paramètre est un premier spectre de longueur d'onde du faisceau laser non-lumière et un second paramètre est un deuxième spectre de longueur d'onde du faisceau de lumière convertie, ledit deuxième spectre de longueur d'onde étant différent du premier spectre de longueur d'onde.

Le premier spectre de longueur d'onde correspond à une couleur verte et le deuxième spectre de longueur d'onde correspond à une couleur rouge. Alternativement, le premier spectre de longueur d'onde correspond à une couleur verte et le deuxième spectre de longueur d'onde correspond à une couleur bleu. Alternativement encore, le premier spectre de longueur d'onde correspond à une couleur rouge et le deuxième spectre de longueur d'onde correspond à une couleur bleu.

Selon l'invention, un paramètre est une intensité du faisceau de lumière convertie.

Le module selon l'invention peut comprendre un module de commande qui compare au moins un paramètre à un seuil prédéfini. Le module peut également comparer simultanément plusieurs des paramètres évoqués ci-dessus.

Selon un exemple alternatif ou complémentaire, le dispositif de détection génère une information de sortie qui a trait à la comparaison entre le paramètre et un seuil prédéfini.

Selon un autre exemple, le module de commande ou le dispositif de détection effectue une ou plusieurs actions correctives si au moins l'un des paramètres franchi ou passe en dessous le seuil prédéfini.

Dans ce cas, l'action corrective comprend au moins une désactivation ou une déviation du faisceau laser généré à partir de la source lumineuse.

Avantageusement, l'action corrective inclut au moins un déplacement d'un système de miroirs électromécaniques pour dévier le faisceau laser en direction d'une zone inactive ménagée sur le dispositif de conversion de lumière.

Avantageusement encore, le dispositif de détection est situé sur le dispositif de conversion de lumière.

Selon un exemple de réalisation, le dispositif de détection est positionné de manière opposée à la source lumineuse par rapport à un axe perpendiculaire à un plan d'extension du dispositif de conversion de lumière et passant par le dispositif de conversion de lumière, notamment par le centre de celui-ci.

Le dispositif de détection peut être une photodiode avec un circuit intégré optoélectronique.

Avantageusement, le dispositif de détection comprend une lentille.

Selon un mode de réalisation, le dispositif de détection inclut le module de commande.

Le module d'éclairage selon l'invention peut comprendre en outre une pluralité de sources de lumière qui génère chacune un faisceau laser.

Selon un mode de réalisation, le dispositif de détection est intégré dans une source lumineuse, avantageusement dans chacune des sources lumineuses pour surveiller le faisceau de lumière convertie généré par la source lumineuse opposée par rapport à l'axe du module d'éclairage.

Le système de sécurité effectue une surveillance du faisceau de lumière convertie en surveillant un spectre de longueur d'onde de la lumière bleue, rouge et verte.

L'invention couvre également un projecteur avant ou un feu arrière d'un véhicule comprenant au moins un module d'éclairage comprenant l'une quelconque des caractéristiques présentées ci-dessus.

L'invention est décrite en détail à l'aide de plusieurs exemples de réalisation non limitatif illustrés dans les figures suivantes. Ces figures sont schématiques et, afin de faciliter leur lecture, ne sont pas nécessairement à l'échelle :
- la figure 1 est un schéma d'un exemple de module d'éclairage installé au sein de projecteur de véhicule, en conformité avec les concepts de la présente divulgation ;
- la figure 2 un schéma synoptique d'un exemple d'un système de sécurité laser utilisé dans le module d'éclairage de la figure 1, en conformité avec les concepts de la présente divulgation ;
- la figure 3 est une vue de côté d'un exemple du dispositif de conversion de lumière assemblé avec un dispositif de projection du module d'éclairage de la figure 1, en conformité avec les concepts de la présente divulgation ;
- la figure 4 est une vue agrandie d'un dispositif de balayage et de la diode laser d'un exemple de réalisation du module d'éclairage, en conformité avec les concepts de la présente divulgation ;
- la figure 5 illustre un exemple de fonctionnement du dispositif de sécurité appliqué au mode de réalisation représenté sur la figure 3 ;
- la figure 6 est une représentation graphique du faisceau de lumière convertie émis par le module de conversion de lumière de la présente invention ;
- la figure 7 est un vue en perspective d'un mode de réalisation du module d'éclairage incorporant un dispositif de détection supplémentaire qui mesure les variations du faisceau de lumière convertie généré par le dispositif de conversion de la lumière.

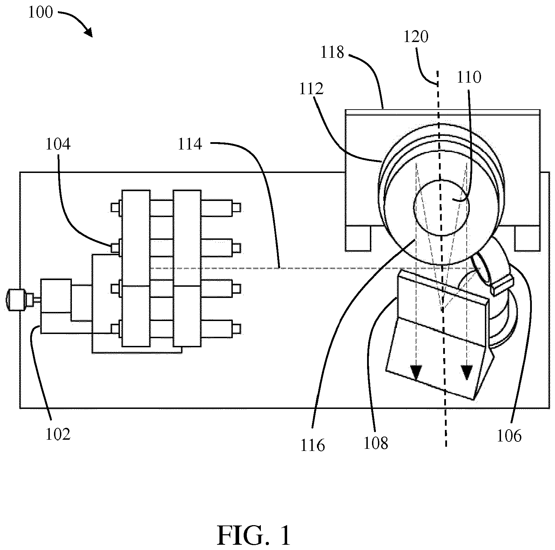

En se référant à la figure 1, un module d'éclairage 100 est représenté. Le module d'éclairage 100 peut être logé dans un projecteur avant de véhicule automobile. Un tel module d'éclairage peut également être installé dans un feu arrière de véhicule automobile. Toutefois, un ou plusieurs aspects de la présente invention peuvent être envisagés pour d'autres applications et/ou dans d'autres environnements.

Le module d'éclairage 100 comprend un système de collimation 102 avec une source lumineuse 104, un miroir réfléchissant 106, un système de miroirs électromécaniques (MEMS) 108, un dispositif de conversion de lumière 118 avec un écran de conversion 110, et un dispositif de projection 112.

Le système de collimation 102 est configuré pour délivrer un faisceau laser 114 avec une divergence minimale. Ceci est réalisé par le biais de la source lumineuse 104 qui délivre un faisceau sensiblement uniforme de la lumière, qui est formé par un spot étroit de particules alignées coaxialement. Le système de collimation 102 peut comprendre un agencement en série de dispositifs optiques, par exemple formés par un ou plusieurs miroirs et/ou une ou plusieurs lentilles plates ou incurvées. Un tel arrangement facilite la propagation du faisceau laser monochromatique 114 et permet d'installer la source lumineuse latéralement par rapport au dispositif de conversion de lumière.

La source lumineuse 104 est une diode laser positionné de façon à diriger le faisceau laser 114 vers certains autres composants associés du système de collimation 102. La source lumineuse 104 peut faire partie du système de collimation 102. La source lumineuse 104 génère un faisceau cohérent de lumière laser qui, lorsqu'il passe au travers du système collimation 102, produit un faisceau laser 114 de couleur bleue. On comprend ici que le spectre de longueur d'onde du faisceau laser 114 correspond à un bleu.

Le miroir réfléchissant 106 est positionné de manière à former un angle par rapport au faisceau laser 114. Cet angle est déterminé par la position du système de miroirs électromécaniques 108 et/ou par la position du dispositif de conversion de lumière 118. Le miroir réfléchissant 106 peut être positionné de façon fixe par rapport à la source lumineuse 104. Ce faisant, le faisceau laser 114 peut être ainsi réfléchi à angle fixe vers les autres composants du module d'éclairage 100.

Le système de miroirs électromécaniques 108 peut être mobile. Ce mouvement peut être directement lié à la position du système de collimation 102 et à celle du miroir réfléchissant 106. De cette manière, le système de miroirs électromécaniques 108 est apte à recevoir un faisceau laser incident 114 à des angles qui varient. En pratique, le faisceau laser 114 peut être réfléchi à un angle qui correspond ou est équivalent à l'angle d'incidence du faisceau laser 114.

Le dispositif de conversion de lumière 118, autrement appelé module convertisseur de lumière, est configuré pour recevoir le faisceau laser réfléchi 114 via le ou les systèmes de miroirs électromécaniques 108. Le dispositif de conversion de lumière 118 est conçu pour convertir le faisceau laser 114 en un faisceau de lumière convertie 116. Par faisceau de lumière convertie, on comprend qu'il s'agit d'un faisceau de lumière dans lequel le phosphore, par exemple, à générer des longueurs d'onde correspondant à une couleur verte et rouge. Le faisceau de lumière convertie est ainsi de couleur blanche, correspondant à une combinaison de rayons de couleur bleue, verte et rouge. Le faisceau de lumière convertie 116 correspond à un faisceau de lumière non dangereux pour une personne placé à l'extérieur du projecteur et le regardant.

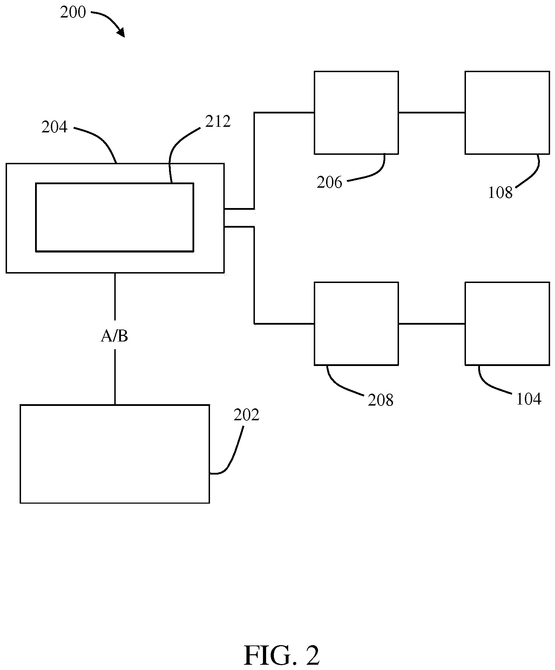

Le module d'éclairage 100 comprend un système de sécurité 200 (figure 2) qui examine le faisceau de lumière convertie 116 et mesure ou détermine les variations d'au moins un paramètre associé au faisceau de lumière convertie 116. Le système de sécurité 200 est adapté pour surveiller uniquement le faisceau de lumière convertie et ne surveille donc pas le faisceau lumineux laser. En particulier, cette mesure de variations peut prendre la forme d'une surveillance ou d'une détection d'un spectre de la lumière émise par le dispositif de conversion 118, y compris un spectre de longueur d'onde correspondant à la couleur bleu, la couleur rouge et/ou la couleur verte, présente dans le faisceau de lumière convertie 116.

Selon l'invention, le système de sécurité 200 mesure le niveau de longueur d'onde correspondant à la couleur rouge ainsi que le niveau de longueur d'onde correspondant à la couleur verte présent dans le faisceau de lumière convertie 116 et détermine un rapport entre ces deux niveaux. Le franchissement d'un seuil par ce rapport peut alors déclencher une action corrective.

De manière complémentaire ou alternative, le système de sécurité 200 mesure le niveau de longueur d'onde correspondant à la couleur rouge ainsi que le niveau de longueur d'onde correspondant à la couleur bleue présent dans le faisceau de lumière convertie 116 et détermine un rapport entre ces deux niveaux. Le franchissement d'un seuil par ce rapport peut alors déclencher une action corrective.

De manière complémentaire ou alternative, le système de sécurité 200 mesure le niveau de longueur d'onde correspondant à la couleur verte ainsi que le niveau de longueur d'onde correspondant à la couleur bleue présent dans le faisceau de lumière convertie 116 et détermine un rapport entre ces deux niveaux. Le franchissement d'un seuil par ce rapport peut alors déclencher une action corrective.

De manière complémentaire ou alternative, le système de sécurité 200 mesure le niveau de longueur d'onde correspondant à la couleur rouge, le niveau de longueur d'onde correspondant à la couleur bleue et le niveau de longueur d'onde correspondant à la couleur bleue présent dans le faisceau de lumière convertie 116 et détermine un rapport entre ces trois niveaux. Le franchissement d'un seuil par ce rapport peut alors déclencher une action corrective.

Dans une alternative autre que l'invention, le système de sécurité 200 mesure le niveau de longueur d'onde correspondant à la couleur bleue présent dans le faisceau de lumière convertie 116 et détermine si ce niveau est acceptable, c'est-à-dire nondangereux, en le comparant à un seuil déterminé.

De manière alternative ou complémentaire, cette surveillance peut également s'opérer à l'égard de la qualité du faisceau émis par le dispositif de conversion 118, c'est-à-dire le faisceau de lumière convertie 116.

Plus particulièrement, selon l'invention, le faisceau de lumière convertie 116 peut comporter au moins deux paramètres associés sur la base desquels la détection ou la surveillance peuvent se produire. Un premier paramètre est un premier spectre de longueur d'onde et un second paramètre est un deuxième spectre de longueur d'onde. Le premier spectre de longueur d'onde est différent du deuxième spectre de longueur d'onde. Dans un mode de réalisation préféré, le premier spectre de longueur d'onde correspond à une couleur verte, tandis que le deuxième spectre de longueur d'onde correspond à une couleur rouge. Alternativement ou de manière complémentaire, au moins l'un du premier ou second paramètre peut également correspondre à une intensité ou un rayonnement du faisceau de lumière convertie 116.

Le dispositif de conversion de lumière 118 comprend un axe 120, qui peut être un axe optique du module d'éclairage 100, et qui est disposée perpendiculairement à un plan dans lequel s'étend le dispositif de conversion de lumière 118. Cet axe 120, ainsi que l'axe optique du module d'éclairage passe au centre du dispositif de conversion 118.

Il est à noter que le dispositif de conversion de lumière 118 peut être plan.

L'écran de conversion 110 constitutif du dispositif de conversion 118 est luminescent. A titre d'exemple, l'écran de conversion 110 peut être couvert d'un matériau de conversion de longueur d'onde qui est apposé sur une plaque ou un cadre, l'ensemble faisant partie du dispositif de conversion de lumière 118. Le matériau peut par exemple être un phosphore déposé sur l'écran de conversion 110.

L'écran de conversion 110 est situé à un emplacement central du dispositif de conversion de lumière 118 pour recevoir de façon appropriée le faisceau laser 114. L'écran de conversion 110 convertit le faisceau laser 114 en un faisceau de lumière convertie 116. La plaque ou le cadre qui reçoit le matériau phosphorescent peut être réalisé en verre, en silicone, ou en un matériau similaire. Cette plaque peut comprendre des ouvertures dans lesquelles la substance fluorescente est retenue. A titre d'exemple, la substance luminescente ou phosphorescente peut être une substance fluorescente jaune, qui peut émettre une lumière jaune. En excitant la substance phosphorescente, la lumière bleue du faisceau laser 114 génère des rayons de lumière convertie, dans son ensemble de couleur blanche.

Dans un mode de réalisation, la source lumineuse 104 peut être une diode laser qui émet une lumière bleue, tandis que l'écran de conversion 110 porte un matériau de conversion qui comprend une substance luminescente émettant une couleur jaune, rouge et verte. Dans encore un autre mode de réalisation, la source lumineuse 104 peut être une diode laser émettant une lumière ultraviolette et l'écran de conversion 110 peut comprendre un matériau de conversion de longueur d'onde qui génère au moins une couleur rouge, verte et bleue.

Le dispositif de projection 112 est disposé à proximité du dispositif de conversion de lumière 118. A titre d'exemple, le dispositif de projection 112 est positionné à une distance d'environ 10 mm de l'écran de conversion 110, mesurée selon l'axe 120 et passant par le centre de l'écran de conversion. Cette configuration facilite le balayage du dispositif de conversion 118 par le faisceau laser 114, pour que la lumière soit ensuite convertie et réfléchie vers le dispositif de projection 112. Ce faisceau de lumière convertie, c'est-à-dire de couleur blanche, est finalement délivré hors du module d'éclairage 100. Le dispositif de projection 112 permet la formation d'une image sur la route, en avant du véhicule, au moyen du faisceau de lumière convertie 116. A titre d'exemple, le dispositif de projection peut être une ou plusieurs lentilles et/ou un objectif.

En se référant à la figure 2, l'interaction entre le système de sécurité 200 et le module d'éclairage est représentée. Le système de sécurité 200 est avantageusement incorporé dans le module d'éclairage 100, et plus particulièrement à l'intérieur de l'un des composants du module d'éclairage 100 présenté ci-dessus. Le système de sécurité 200 est conçu pour mesurer la variation et/ou détecter une ou plusieurs propriétés, et/ou une qualité, d'au moins un paramètre associé au faisceau de lumière convertie 116. Le système de sécurité 200 comprend un dispositif de détection 202 qui peut prendre par exemple la forme d'un capteur photosensible, c'est-à-dire une cellule sensible à la lumière. Il est également possible qu'un module de commande 204 fasse partie du système de sécurité 200.

Le dispositif de détection 202 est agencé pour recevoir directement ou sensiblement directement le faisceau de lumière convertie 116. Alternativement, Le dispositif de détection 202 peut être agencé pour recevoir indirectement le faisceau de lumière convertie 116.

Le dispositif de détection 202 peut être une photodiode avec un circuit intégré optoélectronique (OEIC) configuré pour fournir au moins deux informations distinctives A et B, qui correspondent aux deux paramètres du faisceau de lumière convertie 116. Le dispositif de détection 202 peut-être est positionné au voisinage immédiat du dispositif de conversion de lumière 118, par exemple sur un support de celui-ci. Le dispositif de détection 202 peut encore être situé de manière opposée à la source lumineuse 104 par rapport l'axe 120, quand celui-ci passe au centre du dispositif de conversion de lumière 118.

Le module de commande 204 peut être inclus dans le dispositif de détection 202. Le module de commande 204 peut être connecté au système de miroirs électromécaniques 108 via un conducteur 206. Parallèlement, le module de commande 204 peut également être reliée à la source lumineuse 104 via le pilote de la diode laser 208. Le module de commande 204 est généralement configuré pour comparer au moins un des paramètres du faisceau de lumière convertie 116 avec un seuil prédéfini. Par la suite, le module de commande 204 effectue ou ordonne une ou plusieurs mesures correctives si au moins un paramètre ne respecte pas le seuil prédéfini, soit par dépassement ou en passant en dessous de ce seuil. L'action corrective comprend par exemple la manipulation d'au moins un des systèmes de miroirs électromécaniques 108 et/ou de la source lumineuse 104, soit en envoyant le faisceau laser 114 vers une zone inutilisée de l'écran de conversion 110 et/ou en éteignant la diode laser.

Bien que non limitée, le module de commande 204 peut être un dispositif à base de microprocesseur qui est configuré pour recevoir des signaux provenant du dispositif de détection 202. La réception peut être continue ou périodique, ou une combinaison des deux. Suite à la réception de ces signaux, le module de commande 204 peut traiter ces signaux dans un format lisible pour le calcul et la comparaison avec le seuil prédéfini. Notamment, le module de commande 204 peut comporter un module de calcul et un module de comparaison. En général, le module de commande 204 peut comprendre un ensemble de mémoire non volatiles ou volatils, comme une mémoire à accès aléatoire (RAM) et/ou une mémoire morte (ROM), et des bus d'entrée et de sortie associées. Par exemple, la mémoire peut stocker des informations se rapportant à une réception de signal qui correspond à une violation de l'un ou de plusieurs paramètres du faisceau de lumière convertie 116. En outre, le module de commande 204 peut être conçu comme un circuit intégré spécifique à l'application. Dans un mode de réalisation, le module de commande 204 peut former une partie d'un dispositif de commande installé sur ou dans le projecteur. En variante, le module de commande 204 peut former une partie d'une calculateur installé sur le véhicule (non représentée), ou en variante, le module de commande 204 peut être configuré comme une unité autonome.

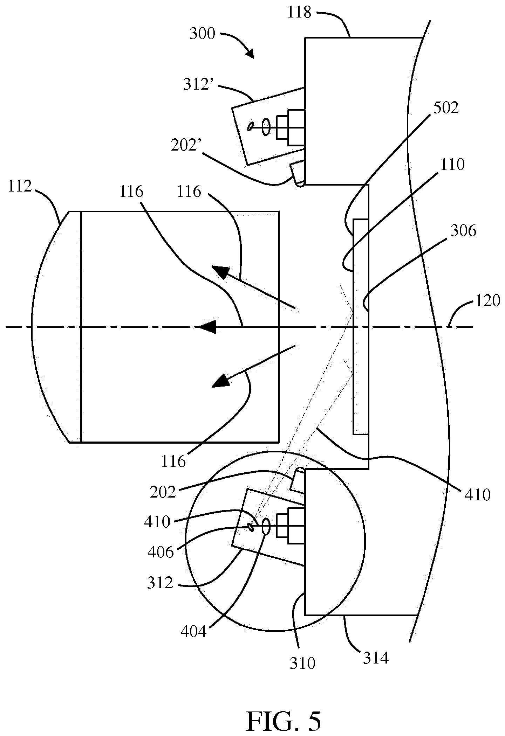

La mémoire 212 dans le module de commande 204 peut stocker une ou plusieurs données relatives au bon fonctionnement du système de sécurité 200. Par exemple, les données peuvent inclure des valeurs prédéfinies ou un seuil d'intensité, de rayonnement, les coordonnées de la position du système de miroirs électromécaniques 108, le spectre du faisceau de lumière convertie 116, etc... Sur la base de ces données, le module de commande 204 peut prendre une ou des mesures correctives pour réduire et/ou empêcher le rejet de rayons laser critiques par le module d'éclairage 100. Comme évoqué plus haut, l'une des mesures correctives comprend le déplacement du système de miroirs électromécaniques 108 de manière à dévier le faisceau laser 114 vers une zone inutilisée 502 (figure 5) du dispositif de conversion de lumière 118.

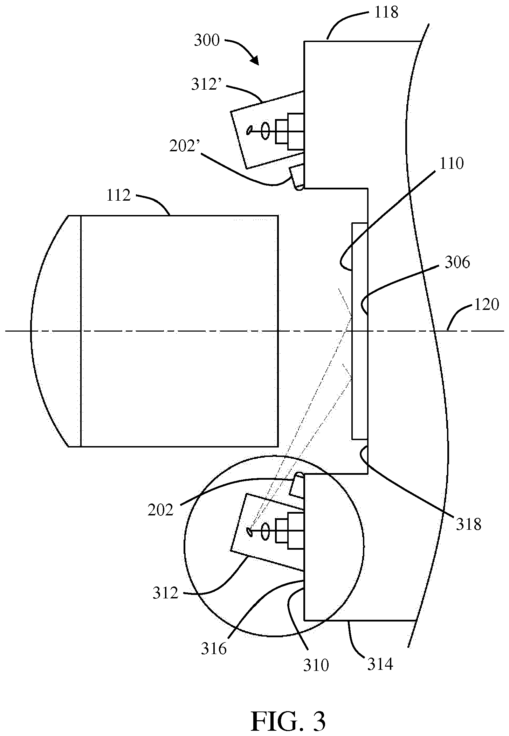

En se référant à la figure 3, une vue de côté schématique d'un module d'éclairage 300 est représentée. Le module d'éclairage 300 est un mode de réalisation du module d'éclairage 100 illustré à la figure 1. Le module d'éclairage 300 comprend le dispositif de conversion de lumière 118 avec deux sources de lumière 312 et 312'.

Le module d'éclairage 300 comprend un corps 314 formant support commun du dispositif de conversion de lumière 118 et des sources de lumière 312 et 312', ces dernières comprenant une diode laser, un miroir réfléchissant 106 et un système de miroirs électromécaniques 108. Le dispositif de conversion de lumière 118 est positionné derrière le dispositif de projection 112 selon l'axe 120. Un système de collimation 310, qui est équivalent au système de collimation 102 montré sur la figure 1, est installé à l'intérieur de la ou des sources de lumière 312, 312'. En outre, un exemple de la position du dispositif de détection 202 est illustré, celui-ci étant solidaire du corps 314 et fixé au pied de la source de lumière. En outre, le dispositif de conversion de lumière 118 inclut l'écran de conversion 110, comme exposée ci-dessus.

Le dispositif de détection 202 peut comprendre un circuit intégré configuré pour surveiller la puissance, l'intensité et/ou la couleur de la lumière générée par le dispositif de conversion de lumière 118. Le dispositif de détection 202 peut généralement avoir une large plage de sensibilité optique, à titre d'exemple entre 400 nm à 1000 nm. Le dispositif de détection 202 peut comprendre des moyens pour ajuster une conversion optique-électrique pour chacune des couleurs rouge, verte et bleue du faisceau de lumière convertie 116. A titre d'exemple, le dispositif de détection 202 peut comprendre un capteur qui comprend une photodiode de 0.7mm de diamètre.

Le dispositif de détection 202 est attaché au corps 314 de manière à être directement exposés à la lumière créée par le dispositif de conversion de lumière 118. A titre d'exemple, le corps du module d'éclairage 314 peut comprendre un épaulement 316 qui délimite une cavité 318. Le dispositif de conversion de lumière 118 est fixé à l'intérieur de la cavité 318, tandis que le dispositif de détection 202 est fixé sur une surface de l'épaulement 316.

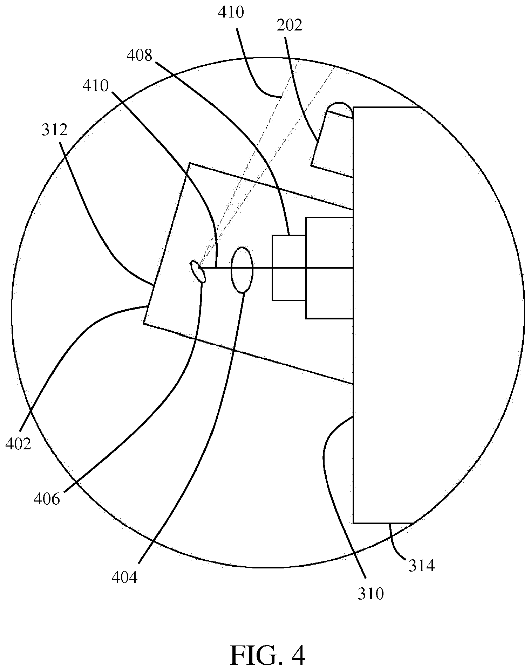

Une pluralité de sources de lumière 312, par exemple, référencé 312' avec un dispositif de détection 202', peuvent être monté sur le corps 314 du module d'éclairage 300 et chaque source de lumière 312 est configurée pour générer un faisceau laser, tel qu'un faisceau laser 410 illustré à la figure 4. Dans un mode de réalisation, le dispositif de détection 202 est intégré à la source lumineuse 312. Dans un tel cas, le dispositif de détection 202 est porté par la source de lumière 312.

La figure 4 est une vue agrandie de la source de lumière 312. La source lumineuse 312 comprend un boîtier 402, qui loge une diode laser 408. La diode laser 408 est équivalente à la source lumineuse 104 montré sur la figure 1. Le dispositif de détection 202 peut comprendre un dispositif optique qui prend notamment la forme d'une lentille ou d'un capot. Un tel dispositif optique permet de diminuer l'intensité de la lumière reçue par la partie sensible du dispositif de détection 202. Il peut également s'agir d'un moyen apte à limiter la saturation lumineuse ou un moyen qui augmente le secteur angulaire mesuré par la partie sensible du dispositif de détection 202.

En outre, la source lumineuse 312 comprend un miroir de balayage 406, qui est équivalent au système de miroirs électromécaniques 108 décrit en référence à la figure 1. Ce miroir de balayage 406 est disposé coaxialement et en série avec la diode laser 408 et la lentille 404. Le miroir de balayage 406 oriente le faisceau laser 410 pour qu'il balaie le dispositif de conversion de lumière.

En se référant maintenant aux figures 4 et 5, un exemple de fonctionnement du module d'éclairage 300 est représenté. En fonctionnement, la source de lumière 312 émet le faisceau laser 410 vers la lentille 404. Le faisceau laser 410 frappe la lentille 404 puis est orienté en direction du dispositif de conversion de lumière 118 par le miroir de balayage 406. Le dispositif de conversion de lumière 118 reçoit le faisceau laser 410 et convertit ce faisceau laser 410 en un faisceau de lumière convertie 116, par exemple de couleur blanche. Une détérioration de fonctionnement du miroir de balayage 406 peut provoquer une saturation de phosphore et ainsi endommager ce phosphore. Le faisceau laser peut alors être réfléchi par la plaque-miroir qui porte le phosphore et être alors réfléchi en direction du dispositif de projection 112. En conséquence, la lumière laser critique et dangereuse peut s'échapper du module d'éclairage 300. Le faisceau laser 410 peut alors être envoyé hors du projecteur sans conversion adéquate. Dans un tel cas, un spectre du faisceau de lumière convertie 116 change. Le dispositif de sécurité 200 surveille ce changement et agit en conséquence.

Compte tenu de l'incorporation du système de sécurité 200, comme décrit ci-dessus, le faisceau de lumière convertie 116 est surveillé généralement tout au long du fonctionnement du module d'éclairage 100. Cependant, cette surveillance peut être effectuée à des intervalles réguliers. Dans un tel cas, le module de commande 204 peut être étalonné de manière appropriée.

Plus précisément, le dispositif de détection 202 génère une information de sortie ou un signal qui se rapporte aux paramètres du faisceau de lumière convertie 116. Le dispositif de détection 202 mesure le spectre d'émission de la lumière émise par le faisceau de lumière convertie. Le dispositif de détection 202 peut également surveiller un rayonnement du faisceau converti 116 et/ou un niveau d'intensité associé. L'un des paramètres du faisceau de lumière convertie 116 est un paramètre lié à un premier spectre de longueur d'onde, alors qu'un autre paramètre est l'image d'un deuxième spectre de longueur d'onde, le dispositif de détection 202 étant en mesure de fournir au moins deux informations distinctive A et B pour le module de commande 204, afin éventuellement de mettre en œuvre une action corrective.

Comme une information A ou B relative à la qualité du faisceau de lumière convertie 116 est fournie au module de commande 204, celui-ci calcule l'écart entre les mesures effectuées et obtenues à partir du dispositif de détection 202, et une valeur de seuil prédéterminée correspondant à chaque paramètre. Par la suite, une comparaison est effectuée pour déterminer si l'information détectée dépasse le seuil prédéterminé. Si un tel dépassement est déterminé, cela signifie qu'il existe un risque de voir le faisceau laser de classe quatre sortir du projecteur. En conséquence, une ou plusieurs actions correctives sont mises en œuvre.

Une première action corrective peut comprendre une manipulation de la position du miroir de balayage 406. Cette manipulation correspond à une déviation du faisceau laser. Cette action vise à positionner le miroir de balayage 406 ou le système de miroirs électromécaniques 108 de façon à diriger ou dévier le faisceau laser 114 vers une surface ou une zone de l'écran de conversion 110 qui est non réflective, ou non-utilisée pour projeter les rayons lumineux vers le dispositif de projection 112 en fonctionnement normal du module d'éclairage. Cette surface ou zone se réfère à la zone inactive 502 illustrée sur la figure 5.

Par exemple, la zone inactive 502 de l'écran de conversion 110 peut être une surface de l'écran de conversion 110 qui n'est pas soumise à un rayon incident directe du faisceau laser 410. Cette mesure corrective est mise en œuvre par le biais du module de commande 204 qui fournit un ensemble de données appropriés à un pilote 206 du système de miroirs électromécaniques (Figure 2). De cette façon, le faisceau laser 410 est dirigé vers la zone inactive 502 de l'écran de conversion 110 de manière à ce que le faisceau de lumière dangereux ne sorte pas du module d'éclairage selon l'invention.

Une seconde action corrective, alternative ou cumulative, peut être une désactivation du faisceau laser 410 générée par la diode laser 408. Cela peut être effectuée par le module de commande 204 dès que le signal se rapportant à une information de violation est recueilli. Le module de commande 204 peut alors provoquer un arrêt de la diode laser 208, qui sera éteinte ou désactivée, arrêtant de ce fait le phénomène d'émission laser.

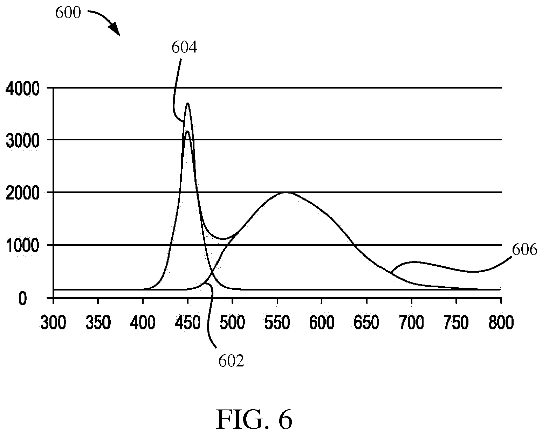

En se référant à la figure 6, un principe qui sous-tend le fonctionnement de la présente invention est décrit par une représentation graphique référencée 600. Cette figure est décrite en liaison avec le module des figures 1, 3 et 5. La représentation graphique 600 illustre la conversion du faisceau laser 114 ou 410 en un faisceau de lumière convertie 116, illustrée par les courbes référencées 602, 604 et 606. Le phosphore présent sur l'écran de conversion 110 génère une couleur verte qui est représentée par la courbe 602. Un spectre de longueur d'onde correspondant à la couleur bleu et provenant soit du faisceau laser, soit de la conversion, est également illustré par la courbe 604. La lumière blanche générée par le dispositif de conversion de lumière est quant à elle illustrée par la courbe référencée 606, correspondant à une combinaison des courbes 602 et 604.

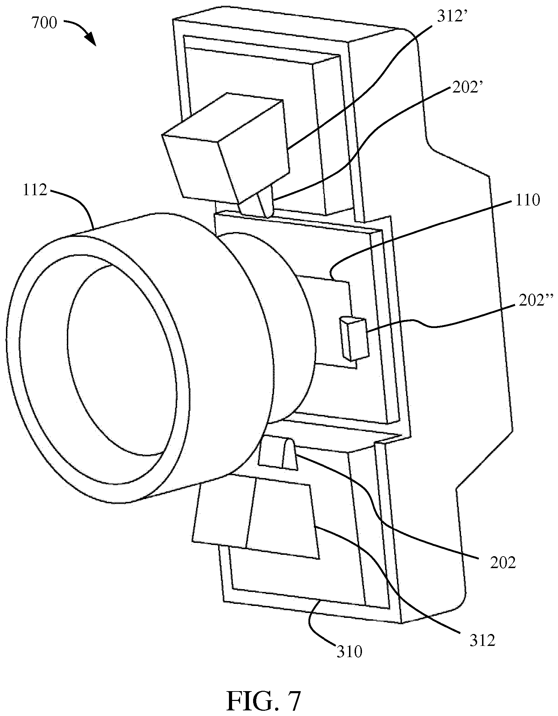

En se référant à la figure 7, un module d'éclairage 700 est représenté. En plus du dispositif de détection 202 décrit ci-dessus, le module d'éclairage 700 comprend un dispositif de détection additionnel 202" qui est solidaire du dispositif de conversion de lumière. Angulairement, ce dispositif de détection additionnel 202" est positionné à 90°, ou sensiblement 90°, par rapport au dispositif de détection primaire 202 et en tournant autour de l'axe optique du module d'éclairage 700. Le dispositif de détection additionnel 202" effectue une mesure de la variation du faisceau de lumière convertie 116, de la manière décrite ci-dessous.

En bref, le système de sécurité 200 est incorporé dans le module d'éclairage 100, 300, 700 et surveille un des niveaux de couleur, une qualité et/ou une intensité du faisceau de lumière convertie 116 généré par le dispositif de conversion de lumière 118. Lorsqu'un ou plusieurs seuils sont franchis, une action corrective est assurée ou demandée par le système de sécurité 200 de manière à empêcher la sortie de rayons laser nocifs à l'extérieur du module d'éclairage 100, 300, 700. Des adaptations de l'invention décrites ci-dessus sont possibles.

## Revendications

1. Module d'éclairage (100) pour un véhicule, comprenant :
- une source lumineuse (104) pour générer un faisceau laser (114),
- un dispositif de conversion de lumière (118) pour convertir le faisceau laser (114) en un faisceau de lumière convertie (116),
- un système de sécurité (200) pour surveiller le faisceau de lumière convertie (116)), le système de sécurité (200) comprenant un dispositif de détection (202) disposé de manière à recevoir directement le faisceau de lumière convertie (116),
le dispositif de détection (202) étant capable de mesurer les variations d'au moins deux paramètres associés au faisceau de lumière convertie (116) et de fournir au moins deux informations distinctives (A, B) correspondant aux deux paramètres du faisceau de lumière convertie (116)
**caractérisé en ce qu'**un premier paramètre est une intensité du faisceau de lumière convertie pour un premier spectre de longueur d'onde du faisceau de lumière convertie (116), et un second paramètre est une intensité du faisceau lumière de convertie pour un deuxième spectre de longueur d'onde du faisceau de lumière convertie (116), ledit deuxième spectre de longueur d'onde étant différent du premier spectre de longueur d'onde.

2. Module selon la revendication 1, comprenant un module de commande (204) qui compare au moins un paramètre à un seuil prédéfini.

3. Module selon la revendication 2, dans lequel le module de commande (204) effectue une ou plusieurs actions correctives si au moins l'un des paramètres franchi ou passe en dessous le seuil prédéfini.

4. Module selon la revendication 3, dans lequel l'action corrective comprend au moins une désactivation ou une déviation du faisceau laser (114) généré à partir de la source lumineuse (104).

5. Module selon l'une quelconque des revendications 3 ou 4, **caractérisé en ce que** l'action corrective inclut au moins un déplacement d'un système de miroirs électromécaniques (108) pour dévier le faisceau laser (114) en direction d'une zone inactive (502) ménagée sur le dispositif de conversion de lumière (118).

6. Module selon l'une quelconque des revendications 1 à 5, dans lequel le dispositif de détection (202) est situé sur le dispositif de conversion de lumière (118).

7. Module selon la revendication 6, dans lequel le dispositif de détection (202) est positionné de manière opposée à la source lumineuse (104) par rapport à un axe perpendiculaire à un plan d'extension du dispositif de conversion de lumière (118) et passant par le dispositif de conversion de lumière (118).

8. Module selon l'une quelconque des revendications 1 à 7, **caractérisé en ce que** le dispositif de détection (202) est une photodiode avec un circuit intégré optoélectronique.

9. Module selon l'une quelconque des précédentes 2 à 5, **caractérisé en ce que** le dispositif de détection (202) inclut le module de commande (204).

10. Module selon l'une quelconque des revendications précédentes, **caractérisé en ce qu'**il comprend en outre une pluralité de sources lumineuses (312) qui génère chacune un faisceau laser (410).

11. Module selon l'une quelconque des revendications 1 à 9 ou 10, dans lequel le dispositif de détection (202) est intégré dans une source lumineuse (312).

12. Module selon l'une quelconque des revendications précédentes, **caractérisé en ce que** la surveillance du faisceau de lumière convertie (116) comprend une surveillance du spectre de longueur d'onde de la lumière bleue, verte et rouge.

13. Projecteur avant ou feu arrière d'un véhicule comprenant au moins un module d'éclairage selon l'une quelconque des revendications précédentes.

## Patentansprüche

1. Beleuchtungsmodul (100) für ein Fahrzeug, das Folgendes beinhaltet:
- eine Lichtquelle (104), um einen Laserstrahl (114) zu erzeugen,
- eine Vorrichtung zur Konvertierung von Licht (118), um den Laserstrahl (114) in einen Strahl konvertierten Lichts (116) zu konvertieren,
- ein Sicherheitssystem (200) zum Überwachen des Strahls konvertierten Lichts (116), wobei das Sicherheitssystem (200) eine Detektionsvorrichtung (202) beinhaltet, die so angeordnet ist, dass sie den Strahl konvertierten Lichts (116) direkt empfängt,
wobei die Detektionsvorrichtung (202) dazu fähig ist, die Schwankungen von mindestens zwei Parametern, die mit dem Strahl konvertierten Lichts (116) assoziiert sind, zu messen und mindestens zwei unterschiedliche Informationen (A, B) zu liefern, die den zwei Parametern des Strahls konvertierten Lichts (116) entsprechen, **dadurch gekennzeichnet, dass** ein erster Parameter eine Intensität des Strahls konvertierten Lichts für ein erstes Wellenlängenspektrum des Strahls konvertierten Lichts (116) ist und ein zweiter Parameter eine Intensität des Strahls konvertierten Lichts für ein zweites Wellenlängenspektrum des Strahls konvertierten Lichts (116) ist, wobei sich das zweite Wellenlängenspektrum von dem ersten Wellenlängenspektrum unterscheidet.

2. Modul nach Anspruch 1, das ein Steuermodul (204) beinhaltet, das mindestens einen Parameter mit einem vordefinierten Schwellenwert vergleicht.

3. Modul nach Anspruch 2, wobei das Steuermodul (204) eine oder mehrere Korrekturmaßnahmen vornimmt, wenn mindestens einer der Parameter den vordefinierten Schwellenwert überschreitet oder unterschreitet.

4. Modul nach Anspruch 3, wobei die Korrekturmaßnahme mindestens eine Deaktivierung oder eine Ablenkung des Laserstrahls (114), der durch die Lichtquelle (104) erzeugt wird, beinhaltet.

5. Modul nach einem der Ansprüche 3 oder 4, **dadurch gekennzeichnet, dass** die Korrekturmaßnahme mindestens eine Verschiebung eines Systems elektromechanischer Spiegel (108) umfasst, um den Laserstrahl (114) in Richtung einer inaktiven Zone (502), die an der Lichtkonvertierungsvorrichtung (118) eingerichtet ist, abzulenken.

6. Modul nach einem der Ansprüche 1 bis 5, wobei sich die Detektionsvorrichtung (202) an der Lichtkonvertierungsvorrichtung (118) befindet.

7. Modul nach Anspruch 6, wobei die Detektionsvorrichtung (202) bezogen auf eine Achse, die zu einer Ausdehnungsebene der Lichtkonvertierungsvorrichtung (118) senkrecht ist und durch die Lichtkonvertierungsvorrichtung (118) verläuft, gegenüberliegend von der Lichtquelle (104) positioniert ist.

8. Modul nach einem der Ansprüche 1 bis 7, **dadurch gekennzeichnet, dass** die Detektionsvorrichtung (202) eine Fotodiode mit einer optoelektronischen integrierten Schaltung ist.

9. Modul nach einem der vorhergehenden Ansprüche 2 bis 5, **dadurch gekennzeichnet, dass** die Detektionsvorrichtung (202) das Steuermodul (204) umfasst.

10. Modul nach einem der vorhergehenden Ansprüche, **dadurch gekennzeichnet, dass** es ferner eine Vielzahl von Lichtquellen (312) beinhaltet, die jeweils einen Laserstrahl (410) erzeugen.

11. Modul nach einem der Ansprüche 1 bis 9 oder 10, wobei die Detektionsvorrichtung (202) in eine Lichtquelle (312) integriert ist.

12. Modul nach einem der vorhergehenden Ansprüche, **dadurch gekennzeichnet, dass** das Überwachen des Strahls konvertierten Lichts (116) ein Überwachen des Wellenlängenspektrums des blauen, grünen und roten Lichts beinhaltet.

13. Vorderscheinwerfer oder Rücklicht eines Fahrzeugs, der/das mindestens ein Beleuchtungsmodul nach einem der vorhergehenden Ansprüche beinhaltet.

## Claims

1. Lighting module (100) for a vehicle, comprising:
- a light source (104) for generating a light beam (114) ,
- a light-converting device (118) for converting the laser beam (114) into a beam of converted light (116),
- a safety system (200) for monitoring the beam of converted light (116), the safety system (200) comprising a detecting device (202) placed so as to receive the beam of converted light (116) directly,
the detecting device (202) being capable of measuring variations in at least two parameters associated with the beam of converted light (116) and of delivering at least two distinctive information items (A, B) corresponding to the two parameters of the beam of converted light (116)
**characterized in that** a first parameter is an intensity of the beam of converted light for a first wavelength spectrum of the beam of converted light (116), and a second parameter is an intensity of the beam of converted light for a second wavelength spectrum of the beam of converted light (116), said second wavelength spectrum being different from the first wavelength spectrum.

2. Module according to Claim 1, comprising a control module (204) that compares at least one parameter to a predefined threshold.

3. Module according to Claim 2, wherein the control module (204) performs one or more corrective actions if at least one of the parameters crosses or passes below the predefined threshold.

4. Module according to Claim 3, wherein the corrective action comprises at least a deactivation or a deviation of the laser beam (114) generated by the light source (104) .

5. Module according to either one of Claims 3 and 4, **characterized in that** the corrective action includes at least a movement of a system of electromechanical mirrors (108) with a view to deviating the light beam (114) in the direction of an inactive region (502) of the light-converting device (118).

6. Module according to any one of Claims 1 to 5, wherein the detecting device (202) is located on the light-converting device (118).

7. Module according to Claim 6, wherein the detecting device (202) is positioned opposite the light source (104) with respect to an axis perpendicular to a plane of extension of the light-converting device (118) and passing through the light-converting device (118).

8. Module according to any one of Claims 1 to 7, **characterized in that** the detecting device (202) is a photodiode with an integrated optoelectronic circuit.

9. Module according to any one of the preceding Claims 2 to 5, **characterized in that** the detecting device (202) includes the control module (204).

10. Module according to any one of the preceding claims, **characterized in that** it furthermore comprises a plurality of light sources (312) that each generates one laser beam (410).

11. Module according to any one of Claims 1 to 9 or 10, wherein the detecting device (202) is integrated into a light source (312).

12. Module according to any one of the preceding claims, **characterized in that** to monitor the beam of converted light (116) the wavelength spectrum of blue, green and red light is monitored.

13. Headlamp or rear light of a vehicle comprising at least one lighting module according to any one of the preceding claims.
